(19) Europäisches Patentamt

European Patent Office

Office européen des brevets

(11) **EP 2 897 284 A1**

(12) **EUROPEAN PATENT APPLICATION**

(43) Date of publication:
**22.07.2015 Bulletin 2015/30**

(21) Application number: **14194884.4**

(22) Date of filing: **26.11.2014**

(51) Int Cl.:
*H02P 27/04* (2006.01)     *H02P 29/02* (2006.01)
*H02P 1/02* (2006.01)     *H02P 1/26* (2006.01)
*H02P 21/14* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **15.01.2014 JP 2014005439**

(71) Applicant: **Kabushiki Kaisha Yaskawa Denki
Kitakyushu-shi, Fukuoka 806-0004 (JP)**

(72) Inventors:
• **Saeki, Takahiro**
  **Kitakyushu-shi, Fukuoka 806-0004 (JP)**
• **Iura, Hideaki**
  **Kitakyushu-shi, Fukuoka 806-0004 (JP)**

(74) Representative: **Viering, Jentschura & Partner
Patent- und Rechtsanwälte
Grillparzerstrasse 14
81675 München (DE)**

(54) **Motor controller and method for controlling motor**

(57)     A motor controller makes a frequency of a voltage applied to an induction motor close to a rotational speed of the induction motor in a free run state. The motor controller includes an evaluation value calculator and an evaluation value searcher. The evaluation value calculator calculates an evaluation value represented by a function including a q-axis current value of a torque current component of a current through the induction motor. The evaluation value has a first sign among a positive sign and a negative sign when the rotational speed is greater than the frequency by a predetermined amount, and has a second sign different from the first sign when the rotational speed is smaller than the frequency by the predetermined amount. The evaluation value searcher performs an evaluation value search to increase or decrease the frequency based on whether the evaluation value has the positive or negative sign.

## FIG. 2

**EP 2 897 284 A1**

**Description**

BACKGROUND

FIELD OF THE INVENTION

The present invention relates to a motor controller and a method for controlling a motor.

DISCUSSION OF THE BACKGROUND

Japanese Unexamined Patent Application Publication No. 2007-159231 discloses that an induction motor in a free run state is turned into a *V/F* control state, and before the induction motor is turned into the *V/F* control state, a speed search is performed. In the speed search, the frequency of a voltage applied to the induction motor is made close to the rotational speed of the induction motor in the free run state.

The contents of Japanese Unexamined Patent Application Publication No. 2007-159231 are incorporated herein by reference in their entirety.

One method of the speed search is to gradually increase or decrease the frequency of the voltage applied to the motor so as to find out a value of the frequency at which a current through the motor is minimal. However, the method involves keeping the frequency increased or decreased until the value of the frequency at which the current is minimal is found. Thus, the search can take a long period of time. In addition, the value of the frequency at which the current is minimal is not defined in advance. Thus, it is difficult to precisely find out the value of the frequency at which the current is minimal.

Another method of the speed search is to increase or decrease the frequency based on an induced voltage attributed to a residual magnetic flux resulting from the induction motor turning into the free run stage. Still another method of the speed search is to increase or decrease the frequency based on an oscillation of a current resulting from a DC voltage applied to the induction motor in the free run state. However, these methods have a limited period of time allowed for the search, and may fail to make the frequency sufficiently close to the rotational speed of the induction motor. Thus, there is a possibility of a large error.

The present disclosure has been made in view of the above-described circumstances, and it is an object of the present disclosure to provide a motor controller and a method for controlling a motor that ensure promptness and readiness in making the frequency of the voltage applied to the induction motor close to the rotational speed of the induction motor in the free run state.

SUMMARY

According to one aspect of the present disclosure, a motor controller is configured to make a frequency of a voltage applied to an induction motor close to a rotational speed of the induction motor in a free run state. The motor controller includes an evaluation value calculator and an evaluation value searcher. The evaluation value calculator is configured to calculate an evaluation value represented by a function including a *q*-axis current value of a torque current component of a current through the induction motor. The evaluation value has a first sign among a positive sign and a negative sign when the rotational speed is greater than the frequency by a predetermined amount, and has a second sign different from the first sign among the positive sign and the negative sign when the rotational speed is smaller than the frequency by the predetermined amount. The evaluation value searcher is configured to execute an evaluation value search to increase or decrease the frequency based on whether the evaluation value has the positive sign or the negative sign.

In one embodiment of the present disclosure, the function representing the evaluation value may include the *q*-axis current value and a *d*-axis value of an excitation current component of the current through the induction motor.

In one embodiment of the present disclosure, the function representing the evaluation value linearly may change between a case of the rotational speed being greater than the frequency by the predetermined value and a case of the rotational speed being smaller than the frequency by the predetermined value.

In one embodiment of the present disclosure, the motor controller may further include a closeness determiner configured to determine, in accordance with the evaluation value, whether the frequency is close to the rotational speed.

In one embodiment of the present disclosure, the motor controller may further include a previous searcher configured to perform at least one of a first search and a second search before the evaluation value search. The first search is to increase or decrease the frequency based on an induced voltage attributed to a residual magnetic flux resulting from the induction motor turning into the free run state. The second search is to increase or decrease the frequency based on an oscillation of a current that results when a DC voltage is applied to the induction motor in the free run state.

In one embodiment of the present disclosure, the function representing the evaluation value may linearly change to 0 when a difference between the rotational speed and the frequency is approximately 0.

According to another aspect of the present disclosure, a motor controller is configured to make a frequency of a voltage applied to an induction motor close to a rotational speed of the induction motor in a free run state. The motor controller includes a previous searcher and a post-searcher. The previous searcher is configured to perform at least one of a first search and a second search. The first search is to increase or decrease the frequency based on an induced voltage attributed to a residual magnetic flux resulting from the induction motor turning into the free run state. The second search is to increase or decrease the frequency based on an oscillation of a current that results when a DC voltage is applied to the induction motor in the free run state. The post-searcher is configured to perform a third search after the at least one of the first search and the second search. The third search is to increase or decrease the frequency based on a $q$-axis current value of a torque current component of a current through the induction motor.

According to another aspect of the present disclosure, a motor controller is configured to make a frequency of a voltage applied to an induction motor close to a rotational speed of the induction motor in a free run state. The motor controller includes an evaluation value calculator and an evaluation value searcher. The evaluation value calculator is configured to calculate an evaluation value represented by a function including a $q$-axis power value of a torque power component of power supplied to the induction motor. The evaluation value has a first sign among a positive sign and a negative sign when the rotational speed is greater than the frequency by a predetermined amount, and has a second sign different from the first sign among the positive sign and the negative sign when the rotational speed is smaller than the frequency by the predetermined amount. The evaluation value searcher is configured to perform an evaluation value search to increase or decrease the frequency based on whether the evaluation value has the positive sign or the negative sign.

According to the other aspect of the present disclosure, a method is for controlling a motor so as to make a frequency of a voltage applied to an induction motor close to a rotational speed of the induction motor in a free run state. The method includes calculating an evaluation value represented by a function including a $q$-axis current value of a torque current component of a current through the induction motor. The evaluation value has a first sign among a positive sign and a negative sign when the rotational speed is greater than the frequency by a predetermined amount, and has a second sign different from the first sign among the positive sign and the negative sign when the rotational speed is smaller than the frequency by the predetermined amount. An evaluation value search is performed to increase or decrease the frequency based on whether the evaluation value has the positive sign or the negative sign.

With the embodiments, the frequency is increased or decreased based on whether the evaluation value has a positive sign or a negative sign. This ensures promptness and readiness in making the frequency close to the rotational speed of the induction motor in the free run state.

BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:

    FIG. 1 is a block diagram illustrating an exemplary motor control system;
    FIG. 2 is a block diagram illustrating an exemplary motor controller;
    FIG. 3A is a graph of an exemplary function representing an evaluation value;
    FIG. 3B is an enlarged graph of a main part of FIG. 3A;
    FIG. 4 is a block diagram illustrating an exemplary evaluation value searcher;
    FIG. 5 is a time chart illustrating an exemplary speed search;
    FIG. 6 is a time chart illustrating an exemplary speed search; and
    FIG. 7 is a time chart illustrating an exemplary speed search.

DESCRIPTION OF THE EMBODIMENTS

The embodiments will now be described in detail with reference to the accompanying drawings, wherein like reference numerals designate corresponding or identical elements throughout the various drawings.

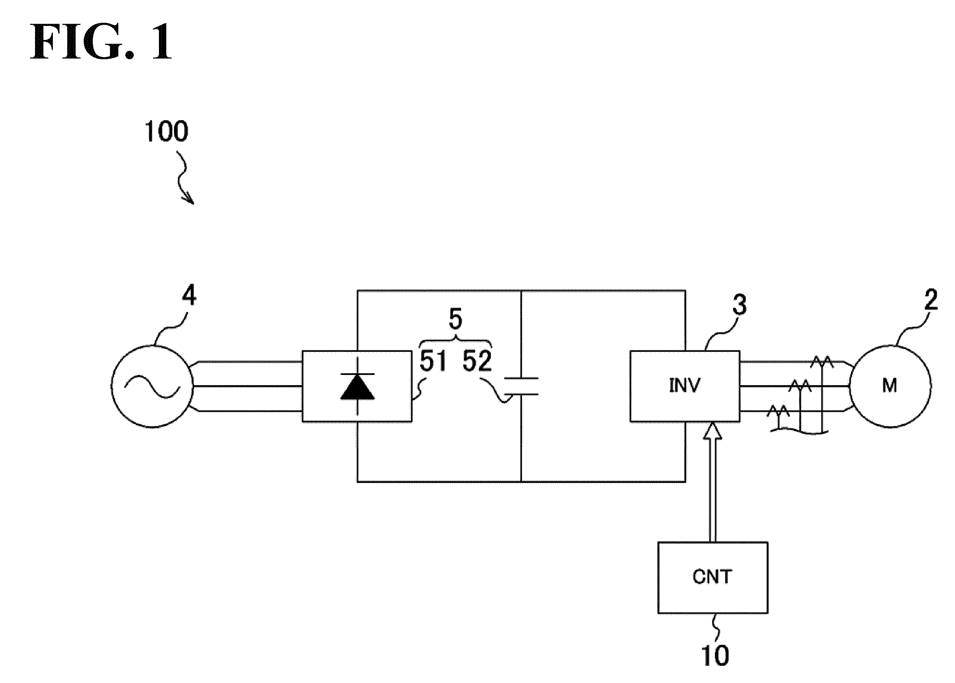

FIG. 1 is a block diagram illustrating a motor control system 100. The motor control system 100 includes an induction motor 2, an inverter 3, an AC (Alternating Current) power supply 4, a converter 5, and a motor controller 10.

The inverter 3 includes a three-phase bridge circuit to convert DC (Direct Current) power supplied from the converter 5 into AC power based on a control signal generated by the motor controller 10. Then, the inverter 3 outputs the converted AC power to the induction motor 2.

The converter 5 includes a rectifier circuit 51 and a capacitor 52. The converter 5 converts AC power supplied from the AC power supply 4 into DC power. Then, the converter 5 outputs the converted DC power to the inverter 3.

The motor controller 10 includes a microprocessor, for example. The motor controller 10 performs information processing based on a program stored in a memory, so as to generate a control signal to control the rotation of the induction motor 2. Then, the motor controller 10 outputs the generated control signal to the inverter 3.

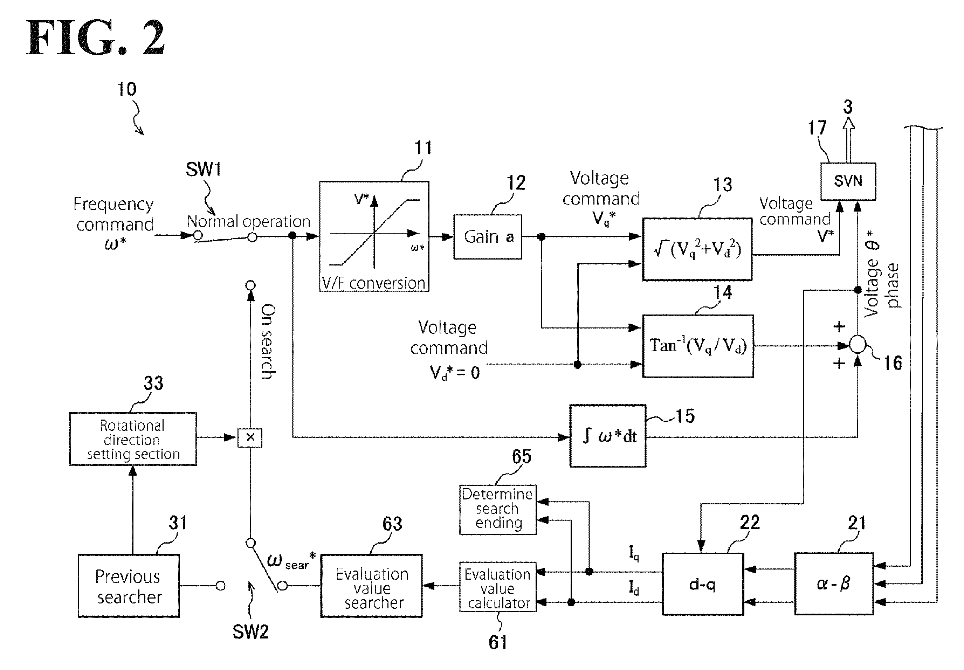

FIG. 2 is a block diagram illustrating an example of the motor controller 10. Each block of the motor controller 10 is implemented by the microprocessor performing the information processing based on the program stored in the memory.

The motor controller 10 performs a normal operation when a switch SW1 is at one side, and performs a speed search when the switch SW1 is another side. In the normal operation, the motor controller 10 performs *V/F* control to keep a constant ratio of a voltage V applied to the induction motor 2 to the frequency of the applied voltage V.

The speed search is a mode in which the induction motor 2 is turned from a free run state into a *V/F* control state. In the free run state, the induction motor 2 is not supplied power but keeps rotation by inertia.

The motor controller 10 includes a *V/F* converter 11, a gain section 12, a voltage commander 13, a voltage phase section 14, an integrator 15, an adder 16, and a PMW controller 17. These blocks are in particular for implementing the normal operation. The motor controller 10 includes an $\alpha$-$\beta$ converter 21 and a *d-q* converter 22.

The motor controller 10 includes a previous searcher 31 and a rotational direction setting section 33. These blocks are for implementing a previous search. The previous search is a part of the speed search.

The motor controller 10 includes an evaluation value calculator 61, an evaluation value searcher 63, and a search ending determiner 65. These blocks are for implementing an evaluation value search. The evaluation value search is also a part of the speed search.

The *V/F* converter 11 performs *V/F* conversion of a frequency command $\omega^*$, which is obtained from an upper-level system, so as to generate a *q*-axis voltage base value. Then, the *V/F* converter 11 outputs the *q*-axis voltage base value to the gain section 12.

The gain section 12 receives the *q*-axis voltage base value from the *V/F* converter 11, and multiplies the *q*-axis voltage base value by a gain *a* so as to calculate a *q*-axis voltage command $V_q^*$. Then, the gain section 12 outputs the *q*-axis voltage command $V_q^*$ to the voltage commander 13 and the voltage phase section 14.

The voltage commander 13 calculates a voltage command $V^*$ based on the *q*-axis voltage command $V_q^*$ from the gain section 12 and based on a *d*-axis voltage command $V_d^*$ (= 0) from the upper-level system. Then, the voltage commander 13 outputs the voltage command $V^*$ to the PMW controller 17.

The voltage phase section 14 calculates a voltage phase correction value based on the *q*-axis voltage command $V_q^*$ from the gain section 12 and based on the *d*-axis voltage command $V_d^*$ (= 0). Then, the voltage phase section 14 outputs the correction value to the adder 16.

The integrator 15 integrates the frequency command $\omega^*$ to calculate a voltage phase base value. Then, the integrator 15 outputs the voltage phase base value to the adder 16.

The adder 16 adds the voltage phase correction value obtained from the voltage phase section 14 to the voltage phase base value obtained from the integrator 15 so as to calculate a voltage phase $\theta^*$. Then, the adder 16 outputs the voltage phase $\theta^*$ to the PMW controller 17 and the *d-q* converter 22.

The PMW controller 17 calculates a control signal based on the voltage command $V^*$ from the voltage commander 13 and based on the voltage phase $\theta^*$ from the adder 16. The control signal is used for PMW control of the rotation of the induction motor 2. Then, the PMW controller 17 outputs the control signal to the inverter 3.

The $\alpha$-$\beta$ converter 21 performs $\alpha$-$\beta$ conversion of a current detection value of the three-phase AC power that the inverter 3 supplies to the induction motor 2 so as to calculate a current detection value in a fixed coordinate system $\alpha$-$\beta$. Then, the $\alpha$-$\beta$ converter 21 outputs the current detection value to the *d-q* converter 22.

The *d-q* converter 22 uses the voltage phase $\theta^*$ obtained from the adder 16 to perform *d-q* conversion of the current detection value in the fixed coordinate system $\alpha$-$\beta$ obtained from the $\alpha$-$\beta$ converter 21. Thus, the *d-q* converter 22 calculates a *q*-axis current value $I_q$ and a *d*-axis current value $I_d$ in a rotary coordinate system *d-q*. Then, the *d-q* converter 22 outputs the *q*-axis current value $Iq$ and the *d*-axis current value $I_d$ to the evaluation value calculator 61 and the search ending determiner 65. The *q*-axis current value $Iq$ is a torque current component. The *d*-axis current value $I_d$ is an excitation current component.

The motor controller 10 performs the previous search when a switch SW2 is at one side, and performs the evaluation value search when the switch SW2 is at another side. In the speed search, the motor controller 10 performs the previous search first and performs the evaluation value search next.

The previous search 31 is a block to perform the previous search. Examples of the previous search include, but are not limited to, a method of increasing or decreasing frequency based on an induced voltage attributed to a residual magnetic flux that results when the induction motor 2 turns into the free run state, and a method of increasing or decreasing frequency based on an oscillation of a current that results when a DC voltage is applied to the induction motor 2 in the free run state. The methods are conventional techniques and will not be elaborated.

The previous searcher 31 performs the previous search to obtain information indicating the rotational direction of the induction motor 2. Then, the previous searcher 31 outputs the information to the rotational direction setting section 33.

The rotational direction setting section 33 obtains from the previous searcher 31 the information indicating the rotational direction of the induction motor 2, and adds the information to a frequency command $\omega_{sear}{}^*$, which is obtained from the evaluation value searcher 63.

The evaluation value calculator 61 calculates an evaluation value J based on the q-axis current value Iq and the d-axis current $I_d$ obtained from the d-q converter 22, and outputs the evaluation value J to the evaluation value searcher 63. The calculation of the evaluation value J will be described in detail later.

The evaluation value searcher 63 calculates the frequency command $\omega_{sear}{}^*$ based on the evaluation value J obtained from the evaluation value calculator 61, and outputs the frequency command $\omega_{sear}{}^*$ to the V/F converter 11 and the voltage phase section 14. The evaluation value searcher 63 will be described in detail later.

Based on the q-axis current value Iq and the d-axis current $I_d$ obtained from the d-q converter 22, the search ending determiner 65 determines whether to end the evaluation value search. For example, the search ending determiner 65 determines to end the evaluation value search when the q-axis current value Iq is below a threshold.

The search ending determiner 65 may determine whether to end the evaluation value search based on the evaluation value J calculated by the evaluation value calculator 61 (here, the search ending determiner 65 serves as a closeness determiner).

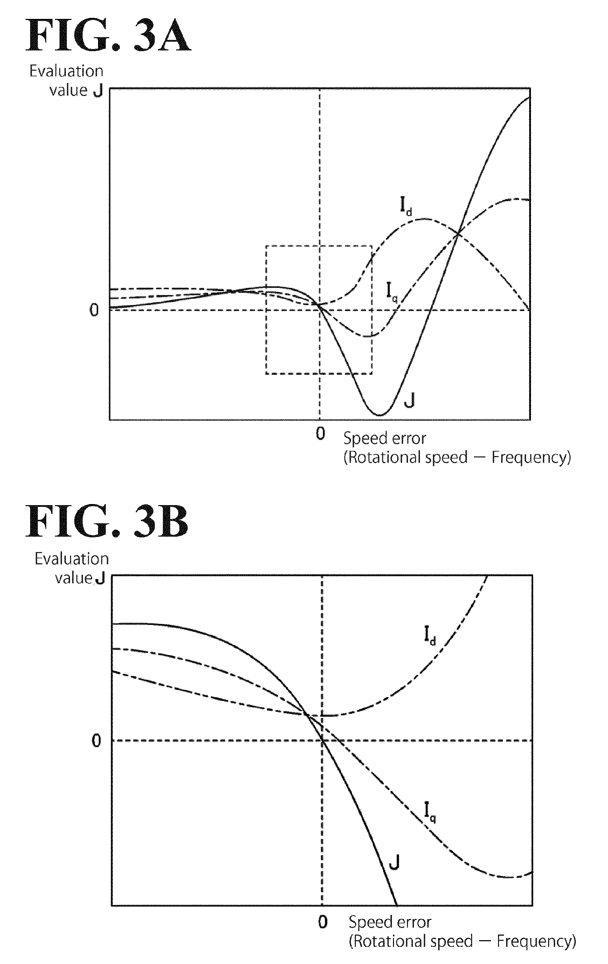

FIG. 3A is a graph of an exemplary function representing the evaluation value J. FIG. 3B is an enlarged graph of a main part of FIG. 3A. The main part is surrounded by a broken line frame at a center portion of FIG. 3A.

As illustrated in each graph, the vertical axis represents the evaluation value J, while the horizontal axis represents speed error. The speed error is a difference between the rotational speed of the induction motor 2 and the frequency of the voltage applied to the induction motor 2. Also as illustrated in each graph, the solid line represents a function of the evaluation value J, the single-dashed line represents the q-axis current value Iq, and the double-dashed line represents the d-axis current value $I_d$.

The following Formula 1 is an example of the function of the evaluation value J. K represents a weighting factor ($0 < K < 1$). In the function of the evaluation value J illustrated in the graphs, K = 0.5.

[Formula 1]

$$J = -(1-K)(I_d - I_q) + K \cdot I_q$$

The function of the evaluation value J includes the q-axis current value Iq and the d-axis current value $I_d$. It should be noted that the function of the evaluation value J may not include the d-axis current value $I_d$ (for example, when K = 1 in Formula 1, a function with the q-axis current value Iq and without the d-axis current value $I_d$ results).

The function of the evaluation value J has one sign among the positive sign and the negative sign when the speed error is a predetermined positive value, and has another sign different from the one sign among the positive sign and the negative sign when the speed error is a predetermined negative value. For example, the evaluation value J shows a different sign, the positive sign or the negative sign, at one end (for example, 5 Hz) and the other end (for example, -5 Hz) of the range of the speed error illustrated in FIG. 3B. It is particularly preferred that the sign of the evaluation value J be reversed between the positive sign and the negative sign when the speed error is approximately 0.

The function of the evaluation value J linearly changes between the predetermined positive value and the predetermined negative value of the speed error. For example, the evaluation value J linearly changes in a part including 0 of the speed range illustrated in FIG. 3B (for example, -2 Hz to 2 Hz). It is particularly preferred that the function of the evaluation value J linearly change to 0 when the speed error is approximately 0.

In the function of the evaluation value J, the sign of the evaluation value J is reversed between the positive sign and the negative sign when the speed error is approximately 0. This makes it easier to make the frequency of the voltage applied to the induction motor 2 close to the rotational speed of the induction motor 2. For example, it is possible to increase the frequency when the evaluation value J has one of the positive sign and the negative sign, and to decrease the frequency when the evaluation value J has the other one of the positive sign and the negative sign.

When K = 1, the function of the evaluation value J is Iq. In this case, the evaluation value J changes to 0 when the speed error is further at the regeneration side than 0. That is, the evaluation value J changes to 0 when the rotational speed is greater than the frequency (that is, at the right side in FIG. 3). In this case, if the frequency is controlled to make the evaluation value J change to 0, the frequency converges further at the regeneration side than the actual rotational speed.

When $K = 0$, the function of the evaluation value $J$ is $I_d - I_q$. In this case, the evaluation value $J$ changes to 0 when the speed error is further at the electromotion side than 0. That is, the evaluation value **J** changes to 0 when the rotational speed is smaller than the frequency (that is, at the left side in FIG. 3). In this case, if the frequency is controlled to make the evaluation value **J** change to 0, the frequency converges further at the electromotion side than the actual rotational speed.

The function of the evaluation value **J** may include a $q$-axis power value $P_q$ and a $d$-axis power value $P_d$ instead of the $q$-axis current value $Iq$ and the $d$-axis current value $I_d$. Since power value **P** is obtained by multiplying a current value **I** and a voltage value **V** together, the relationship indicated in Formula 1 remains unchanged even when the $q$-axis current value $Iq$ and the $d$-axis current value $I_d$ are replaced with the $q$-axis power value $P_q$ and the $d$-axis power value $P_d$.

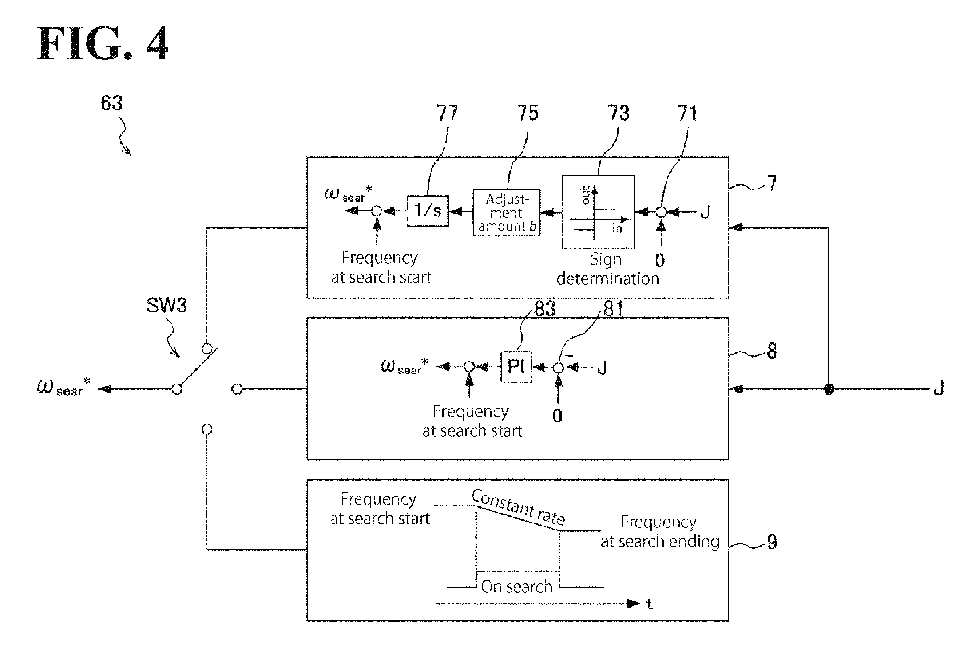

FIG. 4 is a block diagram illustrating an example of the evaluation value searcher 63. The evaluation value searcher 63 includes a first evaluation value searcher 7, a second evaluation value searcher 8, and a third evaluation value searcher 9. A switch SW3 switches the output of the evaluation value searcher 63 among the first to third evaluation value searchers 7 to 9.

The first evaluation value searcher 7 and the second evaluation value searcher 8 are blocks to increase or decrease the frequency based on whether the evaluation value J has the positive sign or the negative sign so as to cause the evaluation value **J** to converge at approximately 0.

The first evaluation value searcher 7 includes a subtractor 71, a sign determiner 73, a multiplier 75, and an integrator 77. The first evaluation value searcher 7 performs hysteresis control.

When the evaluation value **J** is input, the subtractor 71 performs a calculation to reverse the positive sign of the input evaluation value **J** into the negative sign, thus obtaining -J. Then, the subtractor 71 outputs *the -J* to the sign determiner 73.

When the **-J** from the subtractor 71 is positive, the sign determiner 73 outputs a predetermined positive value to the multiplier 75. When the **-J** from the subtractor 71 is negative, the sign determiner 73 outputs a predetermined negative value to the multiplier 75.

The multiplier 75 multiplies the predetermined positive value or the predetermined negative value obtained from the sign determiner 73 by an adjustment value **b,** and outputs the product to the integrator 77.

The integrator 77 integrates the product obtained from the multiplier 75 and outputs the integrated value as the frequency command $\omega_{sear}{}^*$.

The frequency at the start of the search is the frequency at the end of the previous search performed by the previous searcher 31.

The first evaluation value searcher 7 ensures promptness in making the frequency command $\omega_{sear}{}^*$ close to the rotational speed of the induction motor 2 while reducing the load of calculating the frequency command $\omega_{sear}{}^*$.

The second evaluation value searcher 8 includes a subtractor 81 and a PI controller 83. The second evaluation value searcher 8 performs a PI control mode.

When the evaluation value **J** is input, the subtractor 81 performs a calculation to reverse the positive sign of the input evaluation value **J** into the negative sign, thus obtaining -J. Then, the subtractor 81 outputs *the -J* to the PI controller 83.

The PI controller 83 performs PI control to calculate the frequency command $\omega_{sear}{}^*$ to cause the -J from the subtractor 81 to converge at 0. Then, the PI controller 83 outputs the frequency command $\omega_{sear}{}^*$.

The second evaluation value searcher 8 ensures accuracy in making the frequency command $\omega_{sear}{}^*$ close to the rotational speed of the induction motor 2.

The third evaluation value searcher 9 changes the frequency command $\omega_{sear}{}^*$ from the frequency at the start of the search by a predetermined rate.

The third evaluation value searcher 9 ends the search when the evaluation value J converges at approximately 0.

The third evaluation value searcher 9 ensures accuracy in making the frequency command $\omega_{sear}{}^*$ close to the rotational speed of the induction motor 2.

The evaluation value searcher 63 selectively uses one of the evaluation value searchers 7 to 9 to cause the evaluation value J to converge at approximately 0. For example, it is possible to first perform the hysteresis control using the first evaluation value searcher 7 and then perform the PI control mode using the second evaluation value searcher 8. This ensures promptness and accuracy in making the frequency command $\omega_{sear}{}^*$ close to the rotational speed of the induction motor 2.

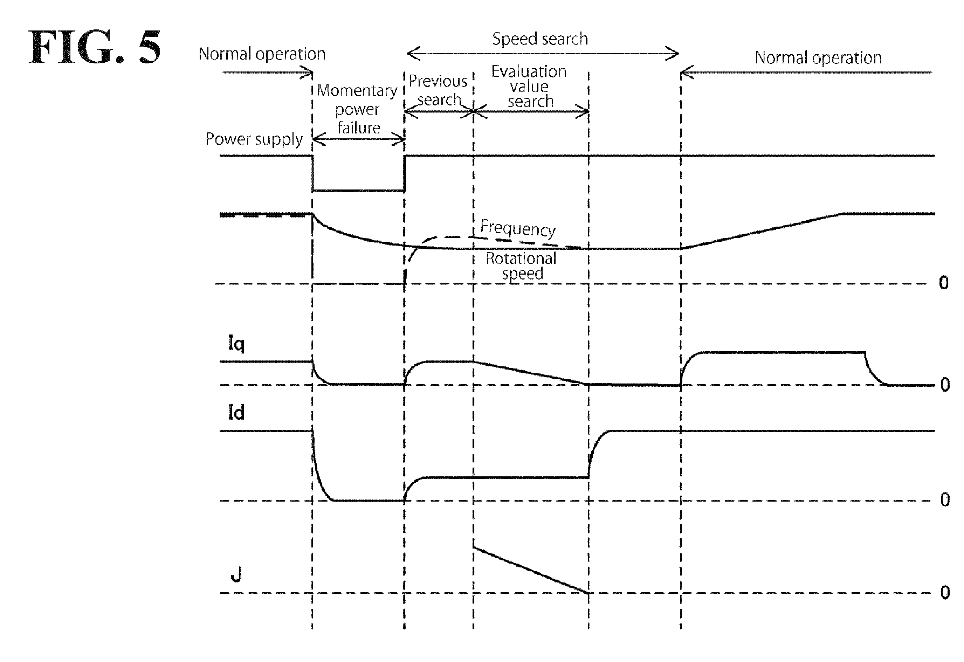

FIG. 5 is a time chart illustrating an exemplary speed search. FIG. 5 illustrates a flow of a momentary power failure followed by the speed search and the normal operation.

When a momentary power failure occurs, the output of the inverter 3 stops and the induction motor 2 turns into the free run state. Then, the rotational speed gradually decreases.

When power supply resumes, the motor controller 10 starts the speed search to make the frequency of the voltage applied to the induction motor 2 close to the rotational speed of the induction motor 2. In the speed search, the motor controller 10 performs the previous search first and performs the evaluation value search next.

The motor controller 10 performs the previous search. The frequency at the end of the previous search is the frequency at the start of the evaluation value search. The motor controller 10 determines the rotational direction of the induction motor 2. The determination as to the rotational direction of the induction motor 2 is made at the end of the previous search.

In the evaluation value search, the motor controller 10 increases or decreases the frequency based on whether the evaluation value $J$ has the positive sign or the negative sign, so as to cause the evaluation value $J$ to converge at approximately 0. Thus, the frequency gradually becomes closer to the rotational speed. The evaluation value search is as described above. The evaluation value search ends when the evaluation value $J$ converges at approximately 0.

After the evaluation value search, the motor controller 10 adjusts the gain $a$ (see FIG. 2) while keeping the frequency unchanged, so as to restore the applied voltage. Then, the motor controller 10 turns into the normal operation.

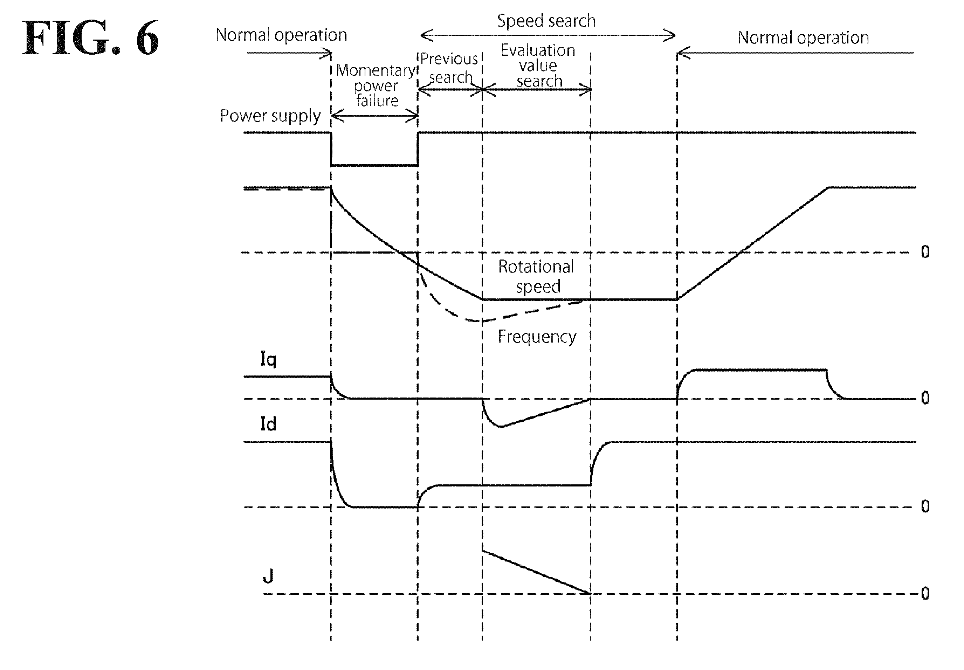

FIG. 6 is a time chart illustrating an exemplary speed search. The following description is concerning those respects different from FIG. 5.

FIG. 6 illustrates a state in which the rotational speed of the induction motor 2 in the free run state has a negative value (that is, a state in which the rotational direction is reversed). In the previous search, the motor controller 10 makes the rotational speed of negative value close to the frequency. In the evaluation value search, the motor controller 10 makes the rotational speed closer to the frequency. In the estimation of the frequency in the evaluation value search, the rotational direction found in the previous search is added to the frequency, as described above (see FIG. 2). This ensures estimation of the frequency based on a correct rotational direction.

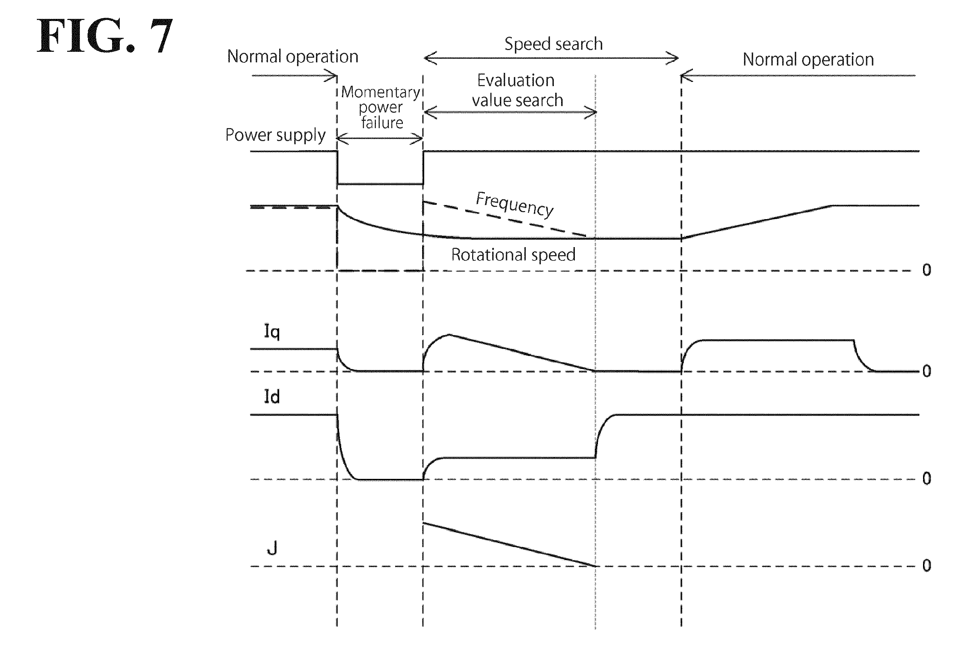

FIG. 7 is a time chart illustrating an exemplary speed search. The following description is concerning those respects different from FIG. 5 or 6.

FIG. 7 illustrates a state in which no previous search is performed; instead the evaluation value search is performed at the start of the speed search. In this example, the rotational direction of the induction motor 2 and the frequency at the start are set in advance, and the evaluation value search is performed based on these rotational direction and frequency. For example, when the rotational direction of the induction motor 2 is positive and the frequency at the start of the search is maximum, then the motor controller 10 starts decreasing the frequency from the maximum toward 0, and finally causes the evaluation value J to converge at approximately 0.

Obviously, numerous modifications and variations of the present disclosure are possible in light of the above teachings. It is therefore to be understood that within the scope of the appended claims, the present disclosure may be practiced otherwise than as specifically described herein.

| | |
|---|---|
| 2 | Induction motor |
| 3 | Inverter |
| 4 | AC power supply |
| 5 | Converter |
| 10 | Motor controller |
| 11 | *V/F* converter |
| 12 | Gain section |
| 13 | Voltage commander |
| 14 | Voltage phase section |
| 15 | Integrator |
| 16 | Adder |
| 17 | PMW controller |
| 21 | $\alpha$-$\beta$ converter |
| 22 | *d-q* converter |
| 31 | Previous searcher |
| 33 | Rotational direction setting section |
| 51 | Rectifier |
| 52 | Capacitor |
| 61 | Calculator |
| 63 | Evaluation value searcher |
| 65 | Search ending determiner |
| 7 | Evaluation value searcher |
| 71 | Subtractor |
| 73 | Sign determiner |
| 75 | Multiplier |
| 77 | Integrator |
| 8 | Evaluation value searcher |
| 81 | Subtractor |

| 83 | PI controller |
| 9 | Evaluation value searcher |
| 100 | Motor control system |

**Claims**

1. A motor controller (10) configured to make a frequency of a voltage applied to an induction motor (2) close to a rotational speed of the induction motor (2) in a free run state, **characterized by**:

   an evaluation value calculator (61) configured to calculate an evaluation value represented by a function comprising a $q$-axis current value of a torque current component of a current through the induction motor (2), the evaluation value having a first sign among a positive sign and a negative sign when the rotational speed is greater than the frequency by a predetermined amount and having a second sign different from the first sign among the positive sign and the negative sign when the rotational speed is smaller than the frequency by the predetermined amount; and
   an evaluation value searcher (63) configured to perform an evaluation value search to increase or decrease the frequency based on whether the evaluation value has the positive sign or the negative sign.

2. The motor controller (10) according to claim 1, wherein the function representing the evaluation value comprises the $q$-axis current value and a $d$-axis value of an excitation current component of the current through the induction motor (2).

3. The motor controller (10) according to claim 1, wherein the function representing the evaluation value linearly changes between a case of the rotational speed being greater than the frequency by the predetermined value and a case of the rotational speed being smaller than the frequency by the predetermined value.

4. The motor controller (10) according to claim 1, further comprising a closeness determiner (65) configured to determine, in accordance with the evaluation value, whether the frequency is close to the rotational speed.

5. The motor controller (10) according to claim 1, further comprising a previous searcher (31) configured to perform at least one of a first search and a second search before the evaluation value search, the first search being to increase or decrease the frequency based on an induced voltage attributed to a residual magnetic flux that results when the induction motor (2) turns into the free run state, the second search being to increase or decrease the frequency based on an oscillation of a current that results when a DC voltage is applied to the induction motor (2) in the free run state.

6. The motor controller (10) according to claim 1, wherein the function representing the evaluation value linearly changes to 0 when a difference between the rotational speed and the frequency is approximately 0.

7. A motor controller (10) configured to make a frequency of a voltage applied to an induction motor (2) close to a rotational speed of the induction motor (2) in a free run state, **characterized by**:

   a previous searcher (31) configured to perform at least one of a first search and a second search, the first search being to increase or decrease the frequency based on an induced voltage attributed to a residual magnetic flux that results when the induction motor (2) turns into the free run state, the second search being to increase or decrease the frequency based on an oscillation of a current that results when a DC voltage is applied to the induction motor (2) in the free run state; and
   a post-searcher configured to perform a third search after the at least one of the first search and the second search, the third search being to increase or decrease the frequency based on a $q$-axis current value of a torque current component of a current through the induction motor (2).

8. A motor controller (10) configured to make a frequency of a voltage applied to an induction motor (2) close to a rotational speed of the induction motor (2) in a free run state, **characterized by**:

   an evaluation value calculator (61) configured to calculate an evaluation value represented by a function comprising a $q$-axis power value of a torque power component of power supplied to the induction motor (2), the evaluation value having a first sign among a positive sign and a negative sign when the rotational speed is greater than the frequency by a predetermined amount and having a second sign different from the first sign among the positive sign and the negative sign when the rotational speed is smaller than the frequency by the predetermined amount; and

an evaluation value searcher (63) configured to perform an evaluation value search to increase or decrease the frequency based on whether the evaluation value has the positive sign or the negative sign.

9. A method for controlling a motor so as to make a frequency of a voltage applied to an induction motor (2) close to a rotational speed of the induction motor (2) in a free run state, **characterized by**:

calculating an evaluation value represented by a function comprising a $q$-axis current value of a torque current component of a current through the induction motor (2), the evaluation value having a first sign among a positive sign and a negative sign when the rotational speed is greater than the frequency by a predetermined amount and having a second sign different from the first sign among the positive sign and the negative sign when the rotational speed is smaller than the frequency by the predetermined amount; and

performing an evaluation value search to increase or decrease the frequency based on whether the evaluation value has the positive sign or the negative sign.

# FIG. 1

EP 2 897 284 A1

# FIG. 2

# FIG. 3A

Evaluation
value J

0    Speed error
(Rotational speed − Frequency)

# FIG. 3B

Evaluation
value J

0    Speed error
(Rotational speed − Frequency)

FIG. 4

# FIG. 5

# FIG. 6

EP 2 897 284 A1

# FIG. 7

EP 2 897 284 A1

**EUROPEAN SEARCH REPORT**

Application Number

EP 14 19 4884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 274900 A (YASKAWA ELECTRIC CORP) 18 October 2007 (2007-10-18) <br> * paragraph [0001]; figures 1,2(a)-(d) * <br> * paragraph [0010] - paragraph [0012] * <br> ----- | 1-9 | INV. <br> H02P27/04 <br> H02P29/02 <br> H02P1/02 <br> H02P1/26 <br> H02P21/14 |
| A | US 6 014 007 A (SEIBEL BRIAN J [US] ET AL) 11 January 2000 (2000-01-11) <br> * column 14, line 60 - column 16, line 34; claim 4; figures 6,7 * <br> ----- | 1-9 | |
| A | EP 1 793 486 A1 (FUJI ELEC FA COMPONENTS & SYS [JP]) 6 June 2007 (2007-06-06) <br> * paragraph [0009] - paragraph [0015] * <br> ----- | 1-9 | |
| A | EP 1 221 765 A1 (YASKAWA DENKI SEISAKUSHO KK [JP]) 10 July 2002 (2002-07-10) <br> * paragraph [0008] - paragraph [0068] * <br> ----- | 1-9 | |

TECHNICAL FIELDS
SEARCHED     (IPC)

H02P

The present search report has been drawn up for all claims

| Place of search | Date of completion of the search | Examiner |
|---|---|---|
| Munich | 3 June 2015 | Gospodinova, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 19 4884

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2015

| Patent document cited in search report | | Publication date | Patent family member(s) | | Publication date |
|---|---|---|---|---|---|
| JP 2007274900 | A | 18-10-2007 | JP | 4539689 B2 | 08-09-2010 |
| | | | JP | 2007274900 A | 18-10-2007 |
| US 6014007 | A | 11-01-2000 | NONE | | |
| EP 1793486 | A1 | 06-06-2007 | CN | 1976213 A | 06-06-2007 |
| | | | EP | 1793486 A1 | 06-06-2007 |
| | | | JP | 4774960 B2 | 21-09-2011 |
| | | | JP | 2007159231 A | 21-06-2007 |
| | | | US | 2007145939 A1 | 28-06-2007 |
| EP 1221765 | A1 | 10-07-2002 | CN | 1375125 A | 16-10-2002 |
| | | | EP | 1221765 A1 | 10-07-2002 |
| | | | JP | 4139934 B2 | 27-08-2008 |
| | | | JP | 2001161094 A | 12-06-2001 |
| | | | TW | I228866 B | 01-03-2005 |
| | | | US | 6815924 B1 | 09-11-2004 |
| | | | WO | 0122570 A1 | 29-03-2001 |

EPO FORM P0459

For more details about this annex : see Official Journal of the European Patent Office, No. 12/82

**EP 2 897 284 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2007159231 A